# EUROPEAN PATENT SPECIFICATION

(11) **EP 1 063 159 B1**
(45) Date of publication and mention of the grant of the patent: **21.07.2004**
(21) Application number: 00500125.0
(22) Date of filing: 14.06.2000
(51) Int. Cl.: B62K 9/02, B62M 1/02, B62M 1/08, F16D 41/30

(54) **Drive and free rotation device for the driving wheel of tricycles**
Freilaufantriebskupplung für Dreiräder
Accouplement roue-libre de transmission pour tricycles

(30) Priority: 25.06.1999 ES 9901682
(43) Date of publication of application: 27.12.2000
(73) Proprietor: Industrias Karpan S.A., 50016 Zaragoza (ES)
(72) Inventor: Beamonte Dominguez, Alfredo, 50004 Zaragoza (ES)
(74) Representative: Ungria Lopez, Javier

(56) References cited:
- DE-A- 4 325 443
- US-A- 1 460 052
- US-A- 2 125 763
- US-A- 2 181 665
- US-A- 4 269 291

## Description

### OBJECT OF THE INVENTION

As expressed in the title of the present specification, the following patent consists of a drive and free rotation device for the driving wheel of tricycles, by means of which the rotation of the driving wheel supporting the pedal support shaft can be caused by a child's normal pedalling, while when the child stops pedalling, the pedal support shaft being static, the free rotation of the driving wheel is permitted as the tricycle is pushed with the subsequent advance movement thereof.

The driving wheel of the tricycle has a device by means of which when the child pedals, it acts as an abutment against a projection of a body integral to the pedal support shaft, driving the wheel so that it rotates, while when the child is not pedalling and the pedal support shaft is immovable, the device that includes the driving wheel, abuts against the projection or projections of the body integral to the pedal support shaft in the opposite direction rotating and likewise permitting the rotation of the wheel if the tricycle is pushed, without causing movement of the pedals.

Hence, the drive and free rotation device of the drive wheel of tricycles is defined by a mechanism that has the big advantage of being able to act as a driving element of the driving wheel or as a free element in order to allow the rotation of the wheel, depending on whether the tricycle is propelled by pedals or the tricycle is pushed in order to cause it to advance.

### FIELD OF APPLICATION

The drive and free rotation device for the driving wheel of tricycles is applicable in order to be included in all types of tricycles, especially for very young children, that permits the pedals to also act as a fixed support and without movement of the child's feet, when the child is not pedalling, as the tricycle is being pushed by an adult.

### BACKGROUND OF THE INVENTION

Conventionally, the drive wheels of tricycles have been assemble in such a way that the shaft of the driving pedals is perfectly locked in its assembly, forming a unitary assembly which makes the pedalling cause the rotation of the wheel, while the movement of the tricycle by pushing and the subsequent rotation of the driving wheel, likewise, produces the rotation of the pedal support shaft locked to it.

Hence, among others we can cited utility model no. 273902 for: Wheel driving device and retainment of the pedal support shaft, which is constituted by an orthohedral body, integral to the pedal support shaft, whose normal side surfaces perpendicular to the shaft have integral respective retaining pieces or projections, being larger than the cross section of the body, in such a way that one of them has an elastic truncated-cone pyramidal shape, whose larger base is applied against the body, while the wheel is provided with a rectangular section central window with dimensions equivalent to the cross section of the orthohedral body, in such a way that said orthohedral body will pass through the central window of the wheel actuating the end pieces of the retaining elements, the truncated-cone pyramidal shaped projection permiting the passing through said window due to its elasticity.

This way of assembly makes a young child, who is the normal user of a child's tricycle, when he becomes tired of pedalling, if he wants to continue riding the tricycle, have to be pushed with the corresponding exhaustion of the person pushing and in order to push the child this person takes on an awkward and not very ergonomic posture. There is also the inconvenience for the child who upon not having a support for his legs, since the rotation of the wheel automatically causes the rotation of the pedals, with the problems of accidents that this may represent as the child may drag his feet against the ground and this may unstabilize the child and the pedals may even knock the child's ankle or foot in their rotation.

A rear bar that allows the tricycle to be pushed in a more comfortable manner is assembled in order to facilitate the pushing of the tricycle, but there is still the inconvenience that there is no support for the feet of the child riding the tricycle and the pedals keep rotating as a result of the advance movement of the tricycle.

Document DE 4325443 describes a lockable freewheel coupling for children's vehicles, in particular for the front wheel of a child's tricycle, comprising a hub sleeve which is connected positively to the wheel, bearing a click toothing on the inner surface of a central recess and together with a click-and-pawl arrangement, which is arranged in the central recess, forms a freewheel coupling in which the freewheel is basically activated when the vehicle runs freely or when the driving direction corresponds to the rearwards direction of travel. The freewheel can optionally be locked by means of an additional, axially displaceable driver sleeve which has a hexagon inner profile in that the driver sleeve is pushed manually onto a driver bushing which is connected in a rotationally fixed manner to the wheel and has a hexagon outer profile, with the result that the torque which is introduced via the pedal cranks can optionally be transferred rigidly to the wheel.

Document US 2181665 describes a pedal drive for velocipedes, having front wheel forks comprising a driving spindle adapted to be rotatably mounted in said forks for operation by said pedals in forward and reverse driving directions, respectively. The pedal drive also comprises a hub for said wheel rotatably mounted on said spindle and adapted to be interposed between said forks, and a forward and reverse clutch between said spindle and hub including a pair of disks fixedly connected to said spindle adjacent the opposite ends thereof, respectively, and each notched to provide a pair of teeth thereon. The teeth on each disk are diametrically opposite, and the teeth on each side of said disks are horizontally aligned. A pair of spring-pressed forward driving pawls pivotally mounted on said hub for engagement with the teeth of one side of the disks, and a pair of reverse driving pawls pivotally mounted on said hub for gravitational action to engage the teeth on the other side of the said disks.

### DESCRIPTION OF THE INVENTION

In order to overcome the described inconveniences and so that the child may use the driving pedals themselves as a support for his feet, while the driving wheel rotates freely as a result of the tricycle being pushed, the present specification describes a drive and free rotation device for the driving wheel of tricycles, in such a way that the drive and free rotation device of the driving wheel, comprises a driving wheel, a rotating pedal support shaft, the former being driver by movement of the latter, a body means connected to said pedal support shaft and means connected to the driving wheel or to the body, said body having a general circular shape with a perimetric abutment projection and closing a circular recess of one side of said driving wheel.

The means connected to the pedal support shaft comprises a further body being integral to the pedal support shaft and provided with an extension, said extension being adjacent to the circular recess of the corresponding side of the wheel and acting as an abutment against a central axial cavity of the driving wheel in which the further body is located, said extension having at least one projection.

The means connected to the driving wheel or to the body comprise a piece, a strip and a rib of the driving wheel said piece having a general shape of an isosceles triangle with its unequal side rounded, and its oppisite vertex directed towards the pedal support shaft, rotating on a shaft and cooperating with a strip at one of its equal shaped sides, while its other side abuts against said rib.

The rotation of the pedal support shaft, as a result of pedalling causes the contact of the corresponding projection of the extension of the body integral to the pedal support shaft with the vertex of the rotating piece with respect to the side that has been aided by the strip making said piece abut against the rib and drive the driving wheel.

The advance movement of the tricycle caused by pushing, with the pedal support shaft fixed, causes the rotation of the driving wheel, making the projecting end of the rotating piece abut against the projections of the extension relative to the body integral to the static pedal support shaft, with respect to its side relative to the rib, making said piece rotate overcoming the force of the strip. Once the rotating piece has been overcome by the corresponding projection, the strip makes it return to its original position abutting against the rib.

In order to complete the description that is going to be made hereinafter and for the purpose of providing a better understanding of the characteristics of the invention, the present specification is accompanied by a set of drawings in whose figures the most characteristic details of the invention are represented in an illustrative and non-restrictive manner.

### BRIEF DESCRIPTION OF THE DRAWINGS

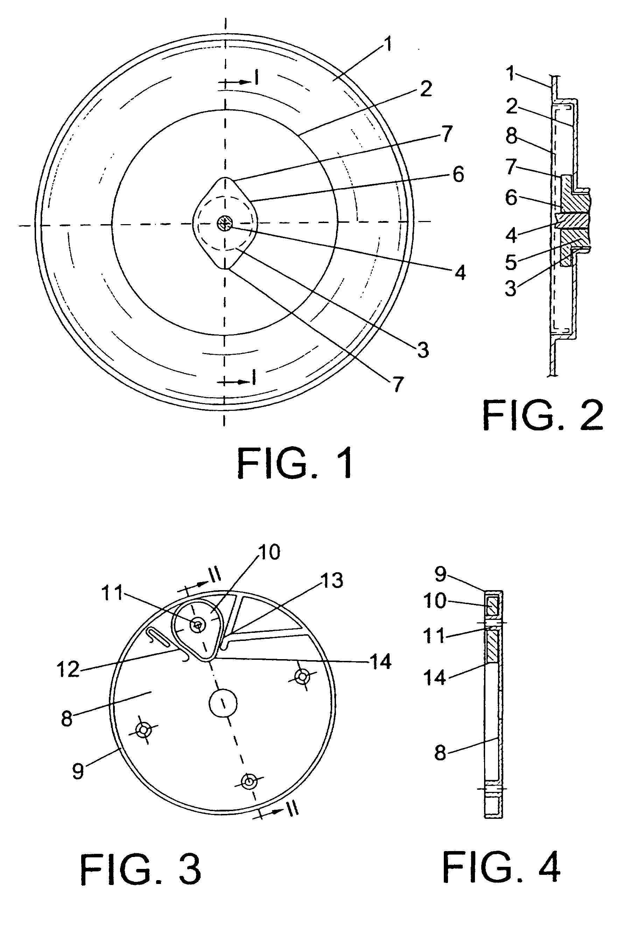

Figure 1 shows a side raised view of the driving wheel of a tricycle with a sectioned pedal support shaft, showing the body integral to the pedal support shaft that has at one of its side an extension with one or several projections abutted against the lateral surface itself of the wheel, being arranged in relation to a side recess of the wheel itself.
Figure 2 shows a sectioned view according to section I-I of the preceding figure, showing how the pedal support shaft is integral to a body which has at one of the sides of the wheel an extension with one or several projections, at the same time that it acts as an abutment against the surface itself of the wheel with respect to said side.
Figure 3 shows a view of the inside surface of the piece for closing the side recess of the wheel, it being possible to see how it has an eccentric rotating piece that on the one side is aided by a strip or spring and on the opposite side is abutted against an abutment rib.
Figure 4 shows a view according to the section II-II of the preceding figure, it being possible to see how the eccentric rotating piece is assembled in relation to a centrally open shaft in order to permit the passing of the corresponding fastening screw of the piece for closing the side of the wheel that incorporates the device.

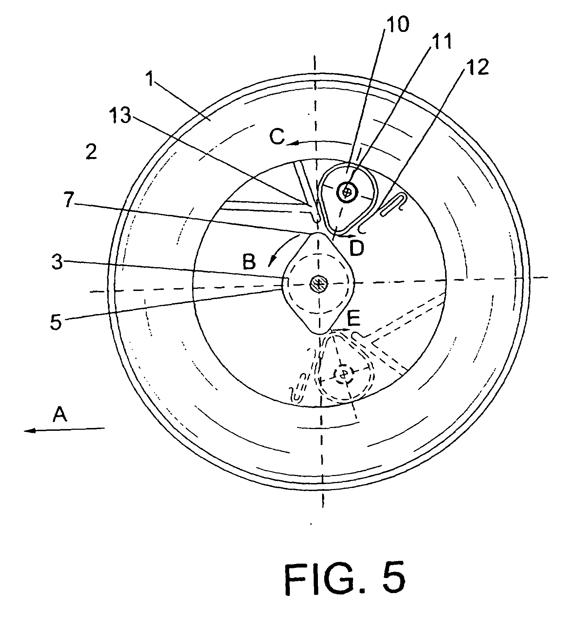

Figure 5 shows a side raised view of the drive and free rotation device for the driving wheel of tricycles, just as it is arranged when assembling the piece for closing the recess of the wheel, that is to say showing it as if the piece for closing had been eliminated.

### DESCRIPTION OF A PREFERRED EMBODIMENT

In view of the commented figures and in accordance with the numbering used, we can see how the driving wheel (1) for a child's tricycle has in its side surface respective circular recesses (2), and a central cavity (3) with a circular section, for the passing of the pedal support shaft (4) and the location of a body (5) injected to said shaft (4).

The body (5) integral to the pedal support shaft (4) has an extension (6) with one or several projections (7). On the other hand, the extension (6) is narrower than the recess (2) of the wheel, and in the assembly of the pedal support shaft (4) it acts as an abutment against the surface of the recess (2).

Hence, the pedal support shaft (4) with the body (5) integral thereto located in the central recess (3) of the wheel has free rotation for which purpose in order for the pedal support shaft to be able to drive the driving wheel in its rotation, it is connected to the drive and free rotation mechanism, in such a way that when the pedal support shaft rotates it acts as a driving element, while when the tricycle is pushed, it acts as a free rotation element.

Furthermore, the drive or free rotation device of the pedal support shaft can be assembled directly on the surface of one of the recesses (2) of the wheel, or on a body (8) for closing said recess (2). The body (8) has a general circular shape with an orthogonal perimetric abutment projection, which when being assembled on the wheel (1) defines the recess for housing the locking and free rotation device.

In the practical implementation of a preferred embodiment of the invention shown in the drawings, the drive and free rotation device is assembled on the body (8) for locking, although as it has also been indicated the device could be assembled directly on the wheel (1).

Hence, one of the bodies (8) for closing has a rotating piece (10) with respect to a shaft (11), said rotating piece (10) being aided by a spring or strip (12) that impels it against a ribbed projection (13).

When the body (8) is assembled in the corresponding circular recess (2) of the wheel (1), the circumference described by the projection or projections (7) of the extension (6) of the body (5) integral to the pedal support shaft (4) interferes with the eccentric end of the rotating piece (10).

Taking into account that the advance movement of the tricycle is produced in the direction of arrow A, the driving wheel (1) rotating in the direction of arrow C, depending on the impelling force for the advance movement of the tricycle, it can happen that:
- If the child is pedalling, the rotation of the pedal support shaft (4) causes the rotation of the projection or projections (7) in the direction of arrow B, contacting the piece (10) on the side of the strip (12), abutting against the rib (13) and causing the advance movement of the tricycle. This possibility is represented in figure 5 with the piece (10) in a broken line tending to rotate in the direction of arrow E.
- If on the contrary the child stops pedalling, the pedal support shaft (4) is static, the pedals acting as a support for the child's feet, and when the tricycle is pushed the rotation of the wheel (1) makes the rotating piece (10) abut against the projection or projections (7) with respect to its side of abutment against the rib, it being able to rotate freely, in the direction of arrow D, since the force of the strip (12) is overcome.

Once the projection (7) is surpassed, the strip (12) makes the piece (10) return to its original position abutting against the rib (13).

In this way, there is a drive and free rotation device for the driving wheel of a tricycle, in such a way that when the child pedals, the device is locked in order to cause the driving of the driving wheel and in order to advance normally, while when the child stops pedalling and the pedals themselves act as footrests, the tricycle can be pushed since the driving wheel rotates freely advancing normally.

## Claims

1. A drive and free rotation device for children's tricycles comprising
a driving wheel (1), a rotating pedal support shaft (4), the former being driven by movement of the latter, a body (8), means connected to said pedal support shaft (4) and means connected to the driving wheel (1) or to the body (8), said body (8) having a general circular shape with a perimetric abutment projection (9) and closing a circular recess (2) of one side of said driving wheel (1)
said drive and rotation device being **characterized in that**
the means connected to the pedal support shaft (4) comprises a further body (5) being integral to the pedal support shaft (4) and provided with an extension (6), said extension (6) being adjacent to the circular recess (2) of the corresponding side of the wheel (1) and acting as an abutment against a central axial cavity (3) of the driving wheel (1) in which the further body (5) is located, said extension (6) having at least one projection (7) and
the means connected to the driving wheel (1) or to the body (8) comprise a piece (10), a strip (12) and a rib (13) of the driving wheel (1), said piece (10) having a general shape of an isosceles triangle with its unequal side rounded and its opposite vertex (14) directed towards the pedal support shaft (4) is rotating on a shaft (11) and cooperating with a strip (12) at one of its equal shaped sides, while its other side abuts against said rib (13).

2. Drive and free rotation device according to claim 1, **characterized in that** rotation of the pedal support shaft (4) as a result of pedalling causes contact of the corresponding projection (7) of the extension (6) with the vertex (14) of the piece (10) with respect to the side that has been aided by the strip (12) making said piece (10) abut against the rib (13), to drive the driving wheel (1).

3. Drive and free rotation device according to claim 1, **characterized in that** advance movement of the tricycle caused by pushingwhen the pedal support shaft (4) remains fixed, causes rotation of the driving wheel (1), making the projecting end (14) of the piece (10) abuts against the projections (7) of the extension (6), with respect to its side abutted against the rib (13), making said piece (10) rotate overcoming the force of the strip (12).

## Patentansprüche

1. Antriebs-und-Freilauf-Vorrichtung für Kinder-Dreiräder, die umfasst:
ein Antriebsrad (1), eine sich drehende Pedal-Tragewelle (4), wobei ersteres durch Bewegung der letzteren angetrieben wird, ein Gehäuse (8), eine Einrichtung, die mit der Pedal-Tragewelle (4) verbunden ist, und eine Einrichtung, die mit dem Antriebsrad (1) oder mit dem Gehäuse (8) verbunden ist, wobei das Gehäuse (8) eine im Allgemeinen kreisartige Form mit einem Umfangs-Anschlagvorsprung (9) hat und eine kreisförmige Vertiefung (2) einer Seite des Antriebsrades (1) verschließt,
wobei die Antriebs-und-Dreh-Vorrichtung **dadurch gekennzeichnet ist, dass**:
die Einrichtung, die mit der Pedal-Tragewelle (4) verbunden ist, ein weiteres Gehäuse (5) umfasst, das integral an der Pedal-Tragewelle (4) ausgebildet und mit einer Erweiterung (6) versehen ist, wobei die Erweiterung (6) an die kreisförmige Aussparung (2) der entsprechenden Seite des Rades (1) angrenzt und als ein Anschlag an einem mittigen axialen Hohlraum (3) des Antriebsrades (1) dient, in dem sich das weitere Gehäuse (5) befindet, wobei die Erweiterung (6) wenigstens einen Vorsprung (7) hat, und
die Einrichtung, die mit dem Antriebsrad (1) oder mit dem Gehäuse (8) verbunden ist, ein Teil (10), einen Streifen (12) und eine Rippe (13) des Antriebsrades (1) umfasst, wobei das Teil (10) eine allgemeine Form eines gleichschenkligen Dreiecks hat und seine ungleiche Seite abgerundet ist und sein gegenüberliegender Scheitel (14), der auf die Pedal-Tragewelle (14) zu gerichtet ist, sich auf einer Welle (11) dreht und mit einem Streifen (12) an einer seiner gleich geformten Seiten zusammenwirkt, während seine andere Seite an der Rippe (13) anliegt.

2. Antriebs-und-Freilauf-Vorrichtung nach Anspruch 1, **dadurch gekennzeichnet, dass** Drehung der Pedal-Tragewelle (4) aufgrund von Pedaltreten Kontakt des entsprechenden Vorsprungs (7) der Erweiterung (6) mit dem Scheitel (14) des Teils (10) in Bezug auf die Seite bewirkt, die von dem Streifen (12) unterstützt worden ist, so dass das Teil (10) an der Rippe (13) anschlägt, um das Antriebsrad (1) anzutreiben.

3. Antriebs-und-Freilauf-Vorrichtung nach Anspruch 1, **dadurch gekennzeichnet, dass** Vorwärtsbewegung des Dreirades, die durch Schieben bewirkt wird, wenn die Pedal-Tragewelle (4) stationär bleibt, Drehung des Antriebsrades (1) bewirkt, so dass das vorstehende Ende (14) des Teils (10) an den Vorsprüngen (7) der Erweiterung (6) in Bezug auf seine an der Rippe (13) anliegende Seite anschlägt, so dass sich das Teil (10) dreht und die Kraft des Streifens (12) überwindet.

## Revendications

1. Dispositif d'entraînement et de rotation libre pour des tricycles pour enfants, comprenant
une roue d'entraînement (1), un arbre rotatif (4) de support des pédales, un corps (8), des moyens raccordés audit arbre (4) de support des pédales et des moyens raccordés à la roue motrice (1) ou au corps (8), ledit corps (8) possédant une forme circulaire générale comportant une partie saillante de butée périphérique (9) et fermant un renfoncement circulaire (2) d'un côté de ladite roue motrice (1),
ledit dispositif d'entraînement et de rotation étant **caractérisé en ce que**
les moyens raccordés à l'arbre (4) de support des pédales comprennent un autre corps (5) qui est solidaire de l'arbre (4) de support des pédales et est pourvu d'un prolongement (6), ledit prolongement (6) étant adjacent au renfoncement circulaire (2) du côté correspondant de la roue (1) et agissant en tant que butée contre une cavité axiale centrale (3) de la roue motrice (1), dans laquelle l'autre corps (5) est situé, ledit prolongement (6) comportant au moins une partie saillante (7), et
les moyens raccordés à la roue motrice (1) ou au corps (8) comprennent une pièce (10), une bande (12) et une nervure (13) de la roue motrice (1), ladite pièce (10) possédant la forme générale d'un triangle isocèle, dont le côté égal est arrondi et dont le sommet opposé (14) dirigé vers l'arbre (4) de support des pédales tourne sur un arbre (11) et coopère avec une bande (12) située sur l'un de ses côtés conformés égaux, tandis que son autre côté est en butée contre ladite nervure (13).

2. Dispositif d'entraînement et de rotation libre selon la revendication 1, **caractérisé en ce que** la rotation de l'arbre (4) de support des pédales lors du pédalage a pour effet que la partie saillante correspondante (7) du prolongement (6) vient en contact avec le sommet (14) de la pièce (10) par rapport au côté qui a été assisté par la bande (12) qui place ladite pièce (10) en butée contre la nervure (13), pour entraîner la roue motrice (1).

3. Dispositif d'entraînement et de rotation libre selon la revendication 1, **caractérisé en ce que** le mouvement d'avance du tricycle, qui est provoqué par la poussée lorsque l'arbre (4) de support des pédales reste fixe, entraîne une rotation de la roue motrice (1) en amenant l'extrémité saillante (14) de la pièce (10) en butée contre les parties saillantes (7) du prolongement (6) par rapport à son côté en butée contre la nervure (13), ce qui amène ladite pièce (10) à tourner en surmontant la force de la bande (12).
